# EUROPEAN PATENT APPLICATION

(11) **EP 4 621 468 A1**
(43) Date of publication of application: **24.09.2025**
(21) Application number: 24164394.9
(22) Date of filing: 19.03.2024
(51) Int. Cl.: G02B 21/00, G01N 21/64, G02B 21/06

(54) **PORTABLE TOTAL INTERNAL REFLECTION FLUORESCENCE MICROSCOPE**

(71) Applicant: Université Fribourg, 1700 Fribourg (CH)
(72) Inventor: LORETAN, Morgane, 1906 Charrat (CH); ACUNA, Guillermo, 3186 Düdingen (CH); FUCHS, Nathan, 1752 Villars-sur-Glâne (CH)
(74) Representative: P&TS SA (AG, Ltd.)

(57) **Abstract**

The present invention concerns a portable total internal reflection fluorescence microscope (1) comprising:
- a portable box (40) comprising:
- a laser stage (10), comprising a laser (100),
- an objective stage (30), comprising an objective (300),
- a sample stage (20), comprising a sample (200) to be observed,
wherein the sample stage (20) is disposed between the laser stage (10) and the objective stage (30),
- a support (50) on the portable box (40), arranged for receiving a camera (21,22),

wherein the sample stage (20) comprises a prism (210),
wherein the laser stage (10) is arranged such that the laser beam (110) has an incidence angle (θ) at the prism (210) comprised in the range of 75° to 90°, the incidence angle (θ) being the angle formed by the laser beam (110) at the prism (210) with respect to a normal (N) of a main plane of the sample stage (20), so as to have a total internal reflection of the laser beam (110) and thus detect a single fluorescent molecule in the sample (200).

## Description

### Technical domain

The present invention concerns a portable total internal reflection fluorescence microscope.

### Related art

Portable, affordable, and easy-to-use devices capable of detecting disease biomarkers such as DNA, RNA, proteins, antibodies, etc. are called point-of-care devices. These devices should achieve the highest possible sensitivity, as this is crucial for early diagnosis, as low concentrations of disease targets are present in body fluids (e.g. blood, saliva, urine) in the early stages of a disease, before symptoms manifest.

The highest theoretical sensitivity lies in the detection of a single molecule. The observation of single fluorescent molecules represents the highest detectable sensitivity and has long been a goal of analytical methods.

The detection of a single fluorophore is crucial for the early diagnosis of a disease, even in the absence of symptoms, as only a small number of biomarkers (virus, DNA, protein, etc.) are present in the patient at this stage. In addition, the number of these biomarkers can be quantified, providing important information about the stage of the disease, making it possible to predict the next stage of the disease and to monitor the efficacy of treatment.

Typically, point-of-care devices are used in the field (indoors or outdoors) where access to specialised centres or laboratories is limited, to provide rapid diagnosis without the need for qualified personnel (as in the recent Covid pandemia) and/or to reduce costs and simplify the procedure (pregnancy tests). Point-of-care devices can also be used by physicians or veterinarians in livestock and poultry to provide the right treatment quickly and reduce unnecessary antibiotic prescribing. Finally, point-of-care devices can also be used for agricultural applications.

State-of-the-art benchtop fluorescence microscopes, i.e. microscopes that use fluorescence to study the properties of a sample, can routinely detect single molecules. However, this comes at the cost of increased cost, size and weight, which makes them non-portable. In addition, due to their complexity, they require skilled personnel to operate them.

Current point-of-care devices compromise sensitivity to achieve portability at an affordable cost, resulting in the inability to detect single molecules.

### Short disclosure of the invention

An aim of the present invention is the provision of a microscope that overcomes the shortcomings and limitations of the state of the art.

Another aim of the invention is the provision of a microscope capable of detecting a single fluorescent molecule like a benchtop fluorescence microscope, but which is at the same time affordable, portable and/or easy to use.

According to the invention, these aims are attained by the object of the attached claims, and especially by the portable total internal reflection fluorescence microscope according to claim 1, wherein embodiments of the invention are given in the dependent claims.

The portable total internal reflection fluorescence microscope according to the invention comprises:
- a portable box comprising:
   - a laser stage, comprising a laser,
   - an objective stage, comprising an objective,
   - a sample stage, comprising a sample to be observed, wherein the sample stage is disposed between the laser stage and the objective stage,
- a support on the portable box, arranged for receiving a camera.

In one preferred embodiment, the camera belongs to an external portable device, as a smartphone.

In another embodiment, the camera is arranged to send data to a remote portable device or to a remote computer.

In another embodiment, the camera is integrated in the microscope, e.g. in the portable box.

According to the invention, the sample stage comprises a prism.

According to the invention, the laser stage is arranged such that the laser beam has an incidence angle at the prism comprised in the range of 75° to 90°, the incidence angle being the angle formed by the laser beam at the prism with respect to a normal of a main plane of the sample stage, so as to have a total internal reflection of the laser beam and thus detect a single fluorescent molecule in the sample.

In one embodiment, the external portable device comprising a camera, is a smartphone device. However, in other embodiments, the external portable device comprising a camera is e.g. a tablet, a wearable device as for example a smart watch, etc.

The microscope according to the invention is portable, i.e. it is arranged to be easily carried or moved, in particular because of its light weight and its small size. In particular, its weight and size are lighter and smaller respectively than the weight and size of known benchtop fluorescence microscopes.

The microscope according to the invention is a total internal reflection fluorescence (TIRF) microscope, i.e. a specific optical fluorescence microscope, which is arranged to examine a very thin section of a sample (less than 200 nm thick) thanks to the total internal reflection as illumination mode. A TIRF microscope uses the excitation of fluorescent species in a thin optical section of the sample supported on a glass slide. Total internal reflection occurs when a light beam hits the interface between two media with different refractive indices at an angle of incidence greater than a critical angle: there is no longer a refracted transmitted beam, only a reflected beam.

In this context, the expression "main plane of the sample stage" refers to the plane of the sample, which is in general parallel to the plane of the sample holder.

According to the invention, the incidence angle is greater, and in particular much greater, than the critical angle. For example, the ratio between the incidence angle and the critical angle is greater than 1.2. For example, for a critical angle of about 60°, the incidence angle is greater than 72°, and could be e.g. at least 80°. This incidence angle makes it possible to couple the entire laser beam into a (small) prim, thereby rendering the microscope portable and cheap, and allows to use different types and/or thicknesses of glass samples without having to realign the laser beam or modify the microscope, thereby rendering the microscope easy to use.

The laser stage is arranged so that design the use of additional optics as mirrors to couple the laser beam at the right angle is avoided.

This incidence angle θ allows the laser beam to be coupled into a smaller prism, which reduces the cost and increases the portability of the microscope.

The design of the objective stage allows it to move freely, independently of the position of the laser beam on the sample. The number of optical elements used to couple the beam and the angle of the prism do not influence or affect the movement of the objective stage.

Advantageously, the microscope according to the invention can detect a single fluorescent molecule as the current state-of-art benchtop fluorescence microscopes, without any enhancement system like plasmonic nanostructures (nano-antennas), but with the advantages of being cheap, portable, user-friendly, safe and easy to use. Advantageously, the microscope according to the invention can perform super-resolution technics like DNA-PAINT, as it can considerably improve the resolution and resolve structures, under the diffraction limit of the microscope.

The portable total internal reflection fluorescence microscope according to the invention is designed to suit many portable devices comprising a camera, e.g. many or all smartphone models, without few or any modification to its setup.

Moreover, the microscope according to the invention comprises three stages, each stage being a separate module, i.e. an independent unit that can be easily removed from the microscope. Its design is then modular making it easy to build.

In one embodiment, the portable box is designed to carry all the parts and materials needed for imaging the sample, and also to protect the user from the laser beam and/or the sample from external light. In a non-limiting example, dimensions of the portable box are 111 mm × 222mm × 83 mm.

In one embodiment, the laser beam diameter is at least one order of magnitude smaller than the maximum dimension of the prism. The laser beam is focused, so that the diameter on the prism is at least one order of magnitude smaller than the prism, to ensure the full beam arrives at an incidence angle larger than the critical one and then is totally reflected on the sample.

With the claimed incidence angle, it is not necessary to reduce the laser beam diameter more which would require more optics or more expensive optic and reduce considerably the area excited on the sample.

In one embodiment, the prism has a maximum dimension, within the range of 2 mm to 6 mm. This small dimension allows to reduce the microscope size.

In one embodiment, the prism is a half-ball lens. In one embodiment, the half-ball lens has a maximum diameter within the range of 2 mm to 6 mm, e.g. of 4 mm. A half ball prism allows the laser beam to be refocused. In addition, if the half ball prism is not perfectly positioned in the microscope, there are few or no problems with the total internal reflection operation of the microscope. Other prism shapes, e.g. triangular shapes, will not allow the microscope to work correctly with total internal reflection if the prism is not perfectly placed in the microscope, e.g. if it is slightly tilted.

In one embodiment, the sample stage comprises a prism holder (e.g. made of glass), wherein the prism is attached to the prism holder, e.g. with an optical adhesive or an optical glue. This allows the sample to be placed and/or the optical path of the laser beam to be adjusted. The prism holder allows to fix in an easy way the prism, ensures a flat surface to place the sample and avoids a rough surface that can disturb/deteriorate the optical path and then the possibility to reach a total internal reflection of the full beam.

In one embodiment, the laser is arranged to be nested in a heat sink, wherein the laser and the heat sink are nested in a shell forming an angle of 0° to 15° with a bottom of the portable box.

In one embodiment, the microscope comprises a battery for powering the laser.

In one embodiment, the microscope also comprises a fan to facilitate cooling of the laser and/or to provide stable beam power, the fan being powered, for example, by a battery. In one embodiment, the fan is powered by the same battery that powers the laser.

In one embodiment, the objective stage is arranged to be moved by a user in at least one direction, e.g. three directions (x, y, z). In one embodiment, the movement in each direction could be performed, for example, by means of alignment screws or any other means arranged to be operated directly by the user.

In one embodiment, the laser stage is arranged to be moved by a user in at least one direction, e.g. in two directions (x, y). Also in this case, the movement in each direction could be performed, for example, by means of alignment screws or any other means arranged to be operated directly by the user.

In one embodiment, the laser stage comprises a lens in front of the laser.

In one embodiment, the laser stage is arranged so that the incidence angle can be adjusted by the user. Also in this case, the movement in each direction could be performed, for example, by means of alignment screws or any other means arranged to be operated directly by the user.

In one embodiment, the laser stage, the sample stage and/or the objective stage could be independently removed from the portable box.

In one embodiment, the microscope comprises means (e.g. one or more magnets) for positioning or repositioning the laser stage, the sample stage and/or the objective stage in the portable box without the need to realign the laser beam. In other words, it is possible, for example, to remove the laser stage and replace it with another (e.g. with a different wavelength) without having to realign the laser. In other words, a laser stage is aligned once and can then be replaced without the need for realignment.

In one embodiment, the portable box comprises:
- a first cover, e.g. on the top of the laser stage and at the same level of the top surface of the sample stage, for preventing the user from being exposed to laser radiation and/or for receiving the support for the (external) camera, and/or
- a second cover (e.g. below the laser stage) arranged to be moved from the portable box, so as to connect to an external cable, e.g. a USB cable.

In one embodiment, the portable box comprises another cover fixed on top of the objective stage and on the side of the box.

In one embodiment, the portable box comprises an external cover covering the full external surface of the box, in particular for protecting the sample stage during transport.

In one embodiment, the support for the camera comprises at least two feet for supporting the external portable device. In one embodiment, the feet are arranged to be freely placed on the portable box.

In one embodiment, the microscope comprises feet under the portable box (e.g. at the four corners). In one embodiment, the feet are made of a material (e.g. silicone) arranged to reduce and/or absorb possible vibrations so as to be able to perform super-resolution imaging (nanoscopy) with the microscope without an optical bench.

In one embodiment, the microscope comprises a LED, e.g. in a cavity next to the prism, for setting the microscope in a bright-field configuration.

In one embodiment, the microscope comprises an immersion oil between the prism holder and the sample substrate, for matching the refractive index between the prism and a sample.

In one embodiment, the sample stage is arranged to be moved by a user in at least one direction, e.g. in two directions (x, y). Also in this case, the movement in each direction could be performed, for example, by means of alignment screws or any other means arranged to be operated directly by the user.

In one embodiment, the objective stage comprises an emission filter. In one embodiment, the emission filter is arranged to be replaced without moving the camera when positioned. This allows, for example, a different laser to be used while keeping the sample and the external portable device in the same position.

In one embodiment, the microscope and in particular the objective stage comprises a protective means, as a protective tissue, a protective fabric, a protective plastic, a protective wood, etc. allowing user eyes protection, e.g. during a measurement, when the laser beam is on.

In one embodiment, the protective tissue is the BK5 - Black Nylon, Polyurethane-Coated Fabric.

### Short description of the drawings

Exemplar embodiments of the invention are disclosed in the description and illustrated by the drawings in which:
Figure 1 illustrates schematically a cut view of the microscope according to one embodiment of the invention, and of an external portable device.
Figure 2 illustrates a perspective view of the microscope according to one embodiment of the invention ready for use, and of an external portable device.
Figure 3 illustrates a perspective view of some parts of the microscope of Figure 2.
Figure 4 illustrates an exploded view of the microscope of Figure 2.
Figure 5 illustrates a perspective view of the laser stage of the microscope of Figure 2.
Figure 6 illustrates a perspective view of the objective stage of the microscope of Figure 2.
Figure 7 illustrates a perspective view of the sample stage of the microscope of Figure 2.
Figures 8A to 8D show an example of a direct single molecule detection.
Figures 9A to 9D show another example of a direct single molecule detection.
Figures 10A to 10D show another example of a direct single molecule detection.
Figures 11A to 11E show an example of cellular DNA-PAINT imaging.

### Examples of embodiments of the present invention

In the following exemplary description, reference will be made, for simplicity's sake, to a smartphone as an external portable device comprising a camera. It should be understood, however, that the invention is not limited to a smartphone, but also includes all the external portable devices comprising a camera, as covered by the claims, e.g. tablets, wearable devices, etc.

In the following exemplary description, the term "microscope" and "TIRF microscope" are used as synonyms.

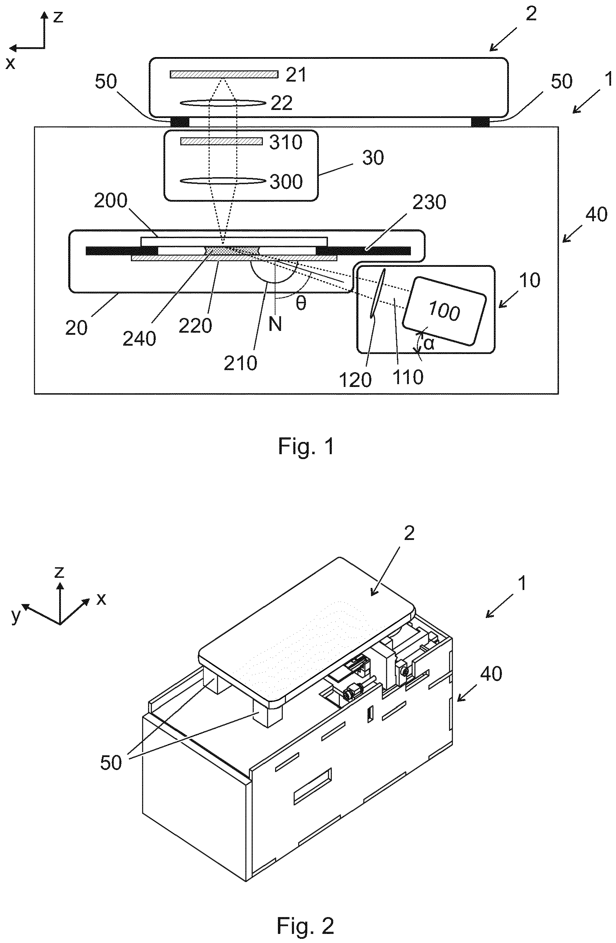

Figure 1 illustrates schematically a cut view of one embodiment of the microscope 1 according to one embodiment the invention, and of a smartphone 2. The smartphone 2 is placed on a support on the upper surface of the portable box 40 of the microscope 1. In this context, the upper surface of the portable box is the surface facing the smartphone 2. In one embodiment, the support for the external portable device comprises at least two feet 50. In one embodiment, the feet are arranged to be freely placed on the portable box, in particular on its upper surface. In one embodiment, the feet are slip-resistant. In one embodiment, the feet are made of silicone. In one embodiment, the feet have a cylindrical, parallepipedal or cubic shape. In one embodiment, the support is arranged so that the distance between the smartphone 2 and the upper surface of the portable box is less than 5 cm, e.g. less than 4 cm.

In one (not illustrated) embodiment, the objective holder is designed to act also as an additional foot, e.g. as a third foot in addition to the two feet 50. This renders more compact the microscope.

The microscope 1 according to the invention is designed to suit many or all smartphones 2, without any modification to the setup.

In one embodiment, the portable box 40 has a substantially parallepipedal form. In a non-limiting example, dimensions of the portable box are 111 mm × 222mm × 83 mm. In one embodiment, the portable box 40 is designed to carry all the parts and materials needed for imaging the sample, and also to protect the user from the laser beam 110 and/or the sample 200 from external light. In one embodiment, the portable box 40 is black.

In one embodiment, the portable box 40 is manufactured by using additive manufacturing techniques, e.g. 3D printing.

In one embodiment, the portable box 40 can be opened and then closed for transport.

In one embodiment, the portable box 40 works as a safety enclosure and can be also used for storing other components during transportation, as optical components, immersion oil, sample(s), etc.

In one embodiment, the portable box 40 comprises a handle.

In one embodiment, the portable box 40 comprises a first cover, e.g. the half-cover 41, on the top of the laser stage and at the same level of the top surface of the sample stage, for preventing the user from being exposed to laser radiation and/or for receiving the support for the external portable device 2, e.g. the cover being at least part of the upper surface of the portable box 40

In one embodiment, the portable box 40 comprises a second cover below the laser stage, arranged to be moved from the portable box 40, so as to connect to an external cable, e.g. a USB cable.

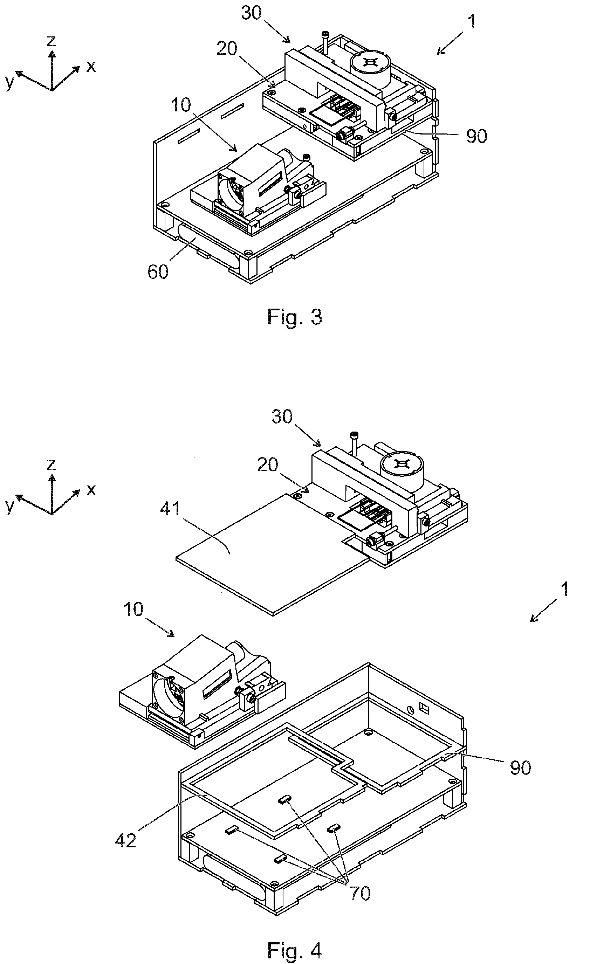

In one embodiment, the half-cover 41 cooperates with the corresponding support 42, as visible in Figure 4.

In one embodiment, the portable box 40 comprises another (not illustrated) cover fixed on top of the objective stage and on the side of the box.

In one embodiment, the portable box comprises an external cover (not illustrated) covering the full external surface of the box, in particular for protecting the sample stage during transport.

The portable box 40 comprises:
- a laser stage 10, comprising a laser 100 and also in the embodiment of Figure 1 a focusing lens 120,
- an objective stage 30, comprising an objective 300 and also in the embodiment of Figure 1 an emission filter 310,
- a sample stage 20 between the laser stage 10 and the objective stage 30, comprising a sample 200 to be observed.

In the embodiment of Figure 1, the objective 300 is a low numerical aperture (NA) air objective, and the light (emitted by the sample and the scattered laser beam) passing through it is filtered by the emission filter 310.

In the embodiment of Figure 1, the sample is supported by a sample holder 230. An immersion oil 240 is placed between a prism holder 220 and the sample holder 230, for matching the refractive index between a prism 210 and the sample 200.

The portable TIRF microscope 1 of Figure 1 excites the sample 200 with the evanescent wave created by a total internal reflection of the laser beam and collects light using a smartphone's camera. A camera typically incorporates both camera lens and imaging sensors. The light passes through a lens 22 e.g. acting as a tube lens, which then focuses it onto the imaging sensor 21. The imaging sensor 21, usually a CMOS or CCD chip, converts the light into electrical signals that can be processed to create the final image. So, a camera contains both optical and imaging components working together to capture and produce images.

Figure 1 sketches also the optical path diagram of the portable TIRF microscope 1. The laser beam 110 of the laser 100 passes through a focusing lens 120 and reaches a prism 210 at an incidence angle θ.

According to the invention, the laser beam 110 has an incidence angle θ at the prism 210 comprised in the range of 75° to 90°, the incidence angle being the angle formed by the laser beam 110 at the prism 210 with respect to a normal N of a main plane of the sample stage 20, so as to have a total internal reflection of the laser beam and thus detect a single fluorescent molecule in the sample 200.

In this context, the expression "main plane of the sample stage" refers to the plane of the sample 200, which is in general parallel to the plane of the sample holder 230.

According to the invention, the incidence angle θ is greater, and in particular much greater, than the critical angle. For example, the ratio between the incidence angle θ and the critical angle is greater than 1.2. For example, for a critical angle of about 60°, the incidence angle is greater than 72°. For example, for a laser wavelength of 532 nm (green), the critical angle is around 62° and the incident angle θ belongs to the range of 80° - 85°.

This incidence angle θ makes it possible to couple the entire laser beam into a (small) prim 210, to use different types and/or thicknesses of glass samples without having to realign the laser beam 110 or modify the microscope 1, thereby rendering the microscope 1 easy to use.

The laser stage is arranged so that design the use of additional optics as mirrors to couple the laser beam at the right angle is avoided.

The design of the objective stage allows it to move freely, independently of the position of the laser beam on the sample. The number of optical elements used to couple the beam and the angle of the prism do not influence or affect the movement of the objective stage. The prism 210 allows to obtain the correct trajectory for the laser beam 110. In the illustrated embodiment, the prism 210 is a half-ball lens. The half-ball lens is fixed to a prism holder 220, e.g. a glass slide, e.g. by using an optical adhesive.

In one embodiment, the laser beam 110 diameter is at least one order of magnitude smaller than the maximum diameter of the half-ball prism 210.

In one embodiment, the half-ball prism 210 has a maximum diameter within the range of 2 mm to 6 mm, e.g. of 4 mm. A half ball prism allows the laser beam to be refocused. In addition, if the half ball prism 210 is not perfectly positioned in the microscope, there are few or no problems with the total internal reflection operation of the microscope 1. Other prism shapes, e.g. triangular shapes, will not allow the microscope to work correctly with total internal reflection if the prism is not perfectly placed in the microscope, e.g. if it is slightly tilted.

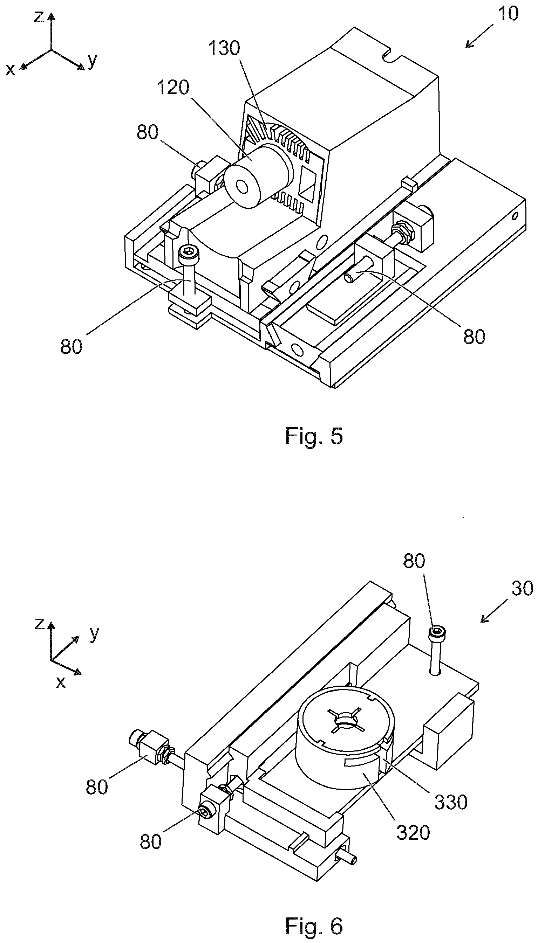

The laser stage 10 shown in Figures 1 and 3 to 5 comprises a laser 100, a heatsink 130 (visible in Figure 5), and alignment screws 80 (visible in Figure 5). In one embodiment, the laser stage 10 has three degrees of freedom that allow translation over the microscope horizontal plane (xy) and fine-tuning of the laser angle (θ) to achieve TIR illumination.

In one embodiment, the laser stage 10 is designed to enable the user to align the laser 100 before it is used for the first time. To facilitate alignment, the laser stage 10 can be moved in two directions, and the laser angle α (visible e.g. in Figure 1) can be adjusted. Indeed, some variations on the initial angle α may be caused by differences in the 3D printing of parts of the portable box 40.

In one embodiment, the laser is an RGB laser comprising three different lasers of different wavelength in a single laser stage. In this case, the angle of incidence, which is greater than the critical angle, is arranged to allow the total internal reflection of the three lasers without the need to exchange the laser stage, or to change the angle between each wavelength of the RGB laser.

In one embodiment, the laser 100 is nested in the heatsink 130 and both are placed inside a small 3D printed shell that gives an angle of 0° to 15° with a bottom of the portable box 40 (i.e. with its surface opposite to the upper surface), so as to obtain an incident angle of 80° - 85° at the prism 210. On the back of the shell, a fan can be screwed to facilitate the cooling of the laser stage 10 and thus provide a stable beam power. The laser and the fan can be both powered by a battery 60, visible e.g. in Figure 3.

In one embodiment, magnets 70 (four in the example of Figure 4) allow the laser stage 10 to be easily removed and repositioned without the need for beam realignment. This gives the setup flexibility when selecting the excitation wavelength, as different lasers 100 can be easily interchanged. In other words, it is possible to remove the laser stage 10 and fit another one with a laser 100 operating in a different wavelength (colours), for example, then replace it without having to realign the laser 100. This allows the user to study different samples 200, without having to buy a new microscope or learn how to realign the laser 100.

In one embodiment, the sample stage 20 and the objective stage 30 can also be easily removed and repositioned, e.g. by using magnets as for the laser stage 10.

In one embodiment, the sample stage 20 and the objective stage 30 fit into a supporting frame 90, visible e.g. in Figure 3.

In one embodiment, the sample stage 20 is arranged to allow the sample 200 to be moved in two directions (x, y), e.g. by using alignment screws 80.

In one embodiment, the sample stage 20 is arranged to allow the sample 200 to be moved in the y-axis. In one embodiment, for the movement on the x-axis, magnets cooperate with ferromagnetic strips or with other magnets (not illustrated) on the sample 200.

In one embodiment, one or more magnets facilitate the positioning of the objective stage 20 each time the microscope 1 will be used or packed.

In one embodiment, the sample stage 20 is arranged to be placed on the TIRF position whatever the sample or glass thickness, or laser wavelength used.

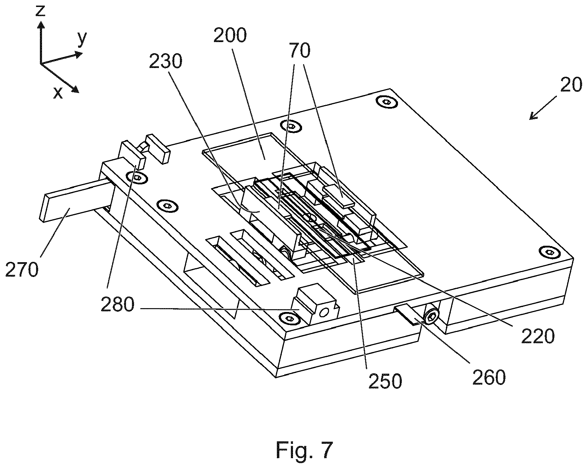

To be able to move the sample over x and y directions, in one embodiment the sample stage 20, visible in Figure 7, houses two different moving elements operated by two screws. On the moving stage, the sample holder 230 can comprise magnets 70 to secure the sample 200 with a top holder.

In one embodiment, a (white) light-emitting diode (LED) is incorporated in a LED cavity 250 next to the prism to set the microscope 1 in a bright-field configuration to allow image pre-focusing, sample positioning and/or bright-field imaging.

In one embodiment, the sample stage 20 comprises a thin black cardboard acting as LED blocker 260 is inserted over the LED to adjust its intensity and/or prevent the laser from exciting undesirably the LED.

In one embodiment, the sample stage 20 comprises a beam blocker 270 used as a manual shutter to obstruct the laser beam 110 between measurements or during the warm-up of the setup.

In one embodiment, the sample stage 20 comprises one or more fixation points 280 that guide and fix the position of the objective stage 30.

In one embodiment, the objective stage 30 is supported by the sample stage 20 and at least partially overlaid on the sample stage 20.

The design of the objective stage 30 allows it to move freely, independently of the position of the laser beam on the sample 200. The number of optical elements used to couple the beam and the angle of the prism do not influence or affect the movement of the objective stage 30.

Figure 6 shows an example of an objective stage 30 conceived to focus on the sample plane (z axis) and to center the objective 300 with respect to the excited area of the sample (xy plane). These degrees of freedom, controlled by alignment screws 80, offer flexibility when using different sample substrates without the need to realign the laser 100.

The objective holder 320 of Figure 6 can contain a low-cost objective 300 (not visible in Figure 6) and the emission filter 310 (not visible in Figure 6). In one embodiment, the emission filter 310 can be easily replaced through a slot 330 on the side of the holder without touching the smartphone 2 when positioned. The objective 300 can also be exchanged if required.

In one embodiment, the objective holder stage can be 3D printed and can comprise four parts:
i) the first part enables the movement in the x-axis of all components of the objective stage with a screw,
ii) the second part allows movement in the y-axis of parts 3 and 4 also with a screw,
iii) the third part is a rectangular piece with a hole in its centre to carry the fourth part and allows the focusing of the smartphone on the sample,
iv) fourth part is a the objective holder designed to contain the objective and the emission filter.

In one embodiment, the objective stage 30 comprises a protective tissue, e.g. fixed (e.g. via a Velcro) to the third part or to the fourth part, to protect the user from the laser beam while allowing the movement of the different components of the objective stage 30.

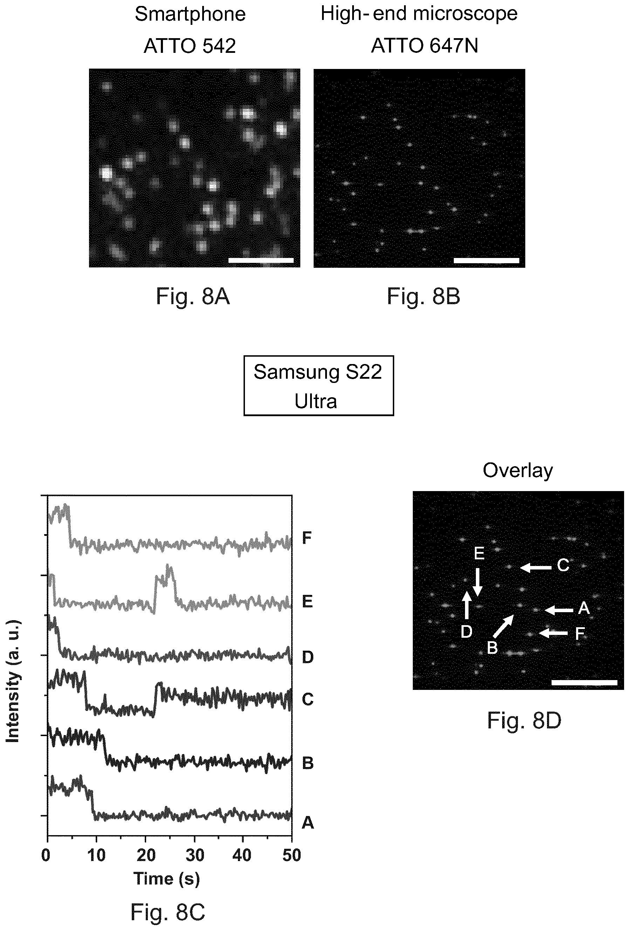

Figures 8A to 8D show an example of a direct single molecule detection with the smartphone-based microscope. In particular, Figure 8A shows a fluorescence image of a two-layer sheet (2LS) DNA-origami structures (having a ATTO542 and a ATTO67N) on quartz recorded with the smartphone-based microscope detecting only the ATTO 542 using a Samsung Galaxy S22 Ultra after the structure are imaged with the high-end microscope (scale bar: 10 µm). Figure 8B shows a fluorescence image of the same 2LS DNA-origami structures on quartz recorded with the high-end microscope detecting only the ATTO 647N (scale bar: 10 µm). Figure 8C shows the intensity traces vs. time of several ATTO 542 single molecules (scale bar: 10 µm). They correspond with the 2LS nanostructures indicated in the overlayed image shown in Figure 8D. Figure 8D shows an overlay of images of Figures 8A and 8B. Arrows and numbers indicate intensity traces plotted in Figure 8D.

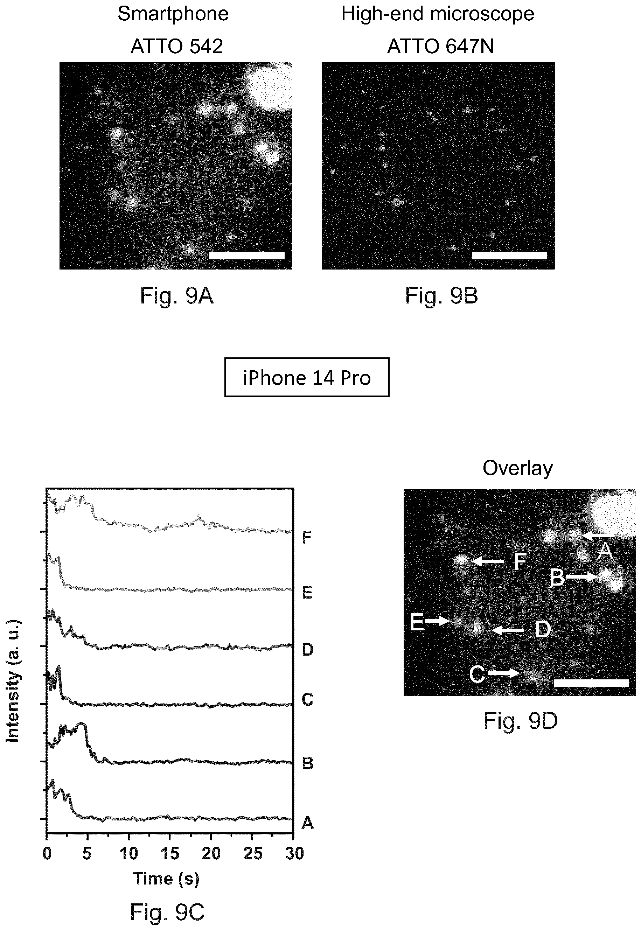

Figures 9A to 9D show another example of a direct single molecule detection with the smartphone-based microscope. In particular, Figure 9A shows a fluorescence image of the 2LS origami structures on quartz recorded with the smartphone-based microscope detecting only the ATTO 542 using an iPhone 14 pro after the structure are imaged with the high-end microscope (scale bar: 10 µm). Figure 9B shows a fluorescence image of the same 2LS DNA-origami structures on quartz recorded with the high-end microscope detecting only the ATTO 647N (scale bar: 10 µm). Figure 9C shows the intensity traces vs. time of several ATTO 542 single molecules (scale bar: 10 µm). They correspond with the 2LS nanostructures indicated in the overlayed image shown in Figure 9D. Figure 9D shows an overlay of images of Figures 9A and 9B. Arrows and numbers indicate intensity traces plotted in Figure 9D.

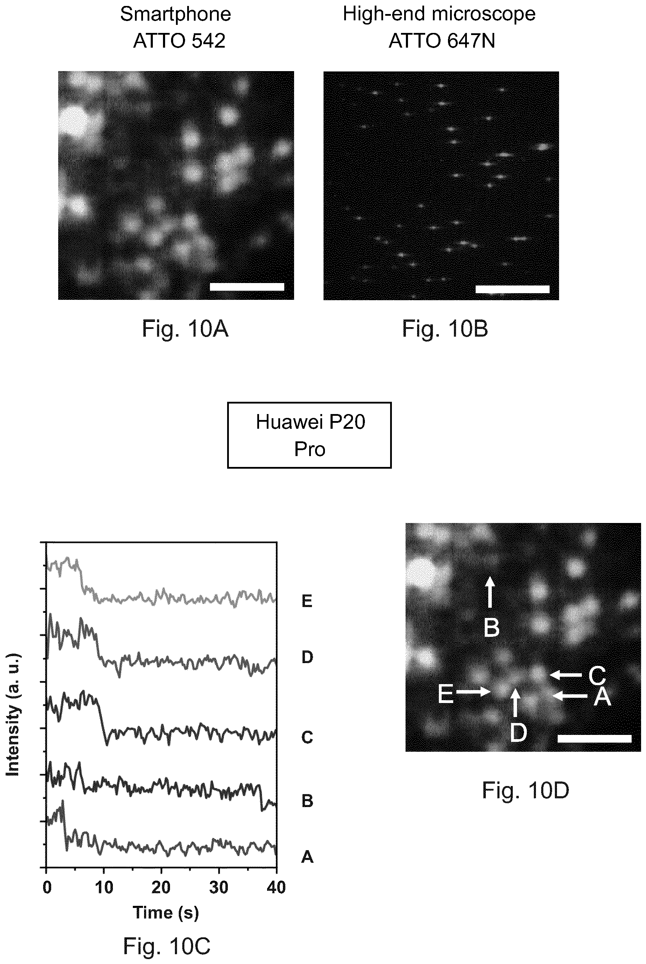

Figures 10A to 10D show another example of a direct single molecule detection with the smartphone-based microscope. In particular, Figure 10A shows a fluorescence image of the 2LS origami on quartz recorded with the smartphone-based microscope detecting only the ATTO 542 using a Huawei P20 pro after the structure are imaged with the high-end microscope (scale bar: 10 µm). Figure 10B shows a fluorescence image of the same 2LS DNA-origami structures on quartz recorded with the high-end microscope detecting only the ATTO 647N (scale bar: 10 µm). Figure 10C shows the intensity traces vs. time of several ATTO 542 single molecules (scale bar: 10 µm). They correspond with the 2LS nanostructures indicated in the overlayed image shown in Figure 10D. Figure 10D shows an overlay of images of Figures 10A and 10B. Arrows and numbers indicate intensity traces plotted in Figure 10D.

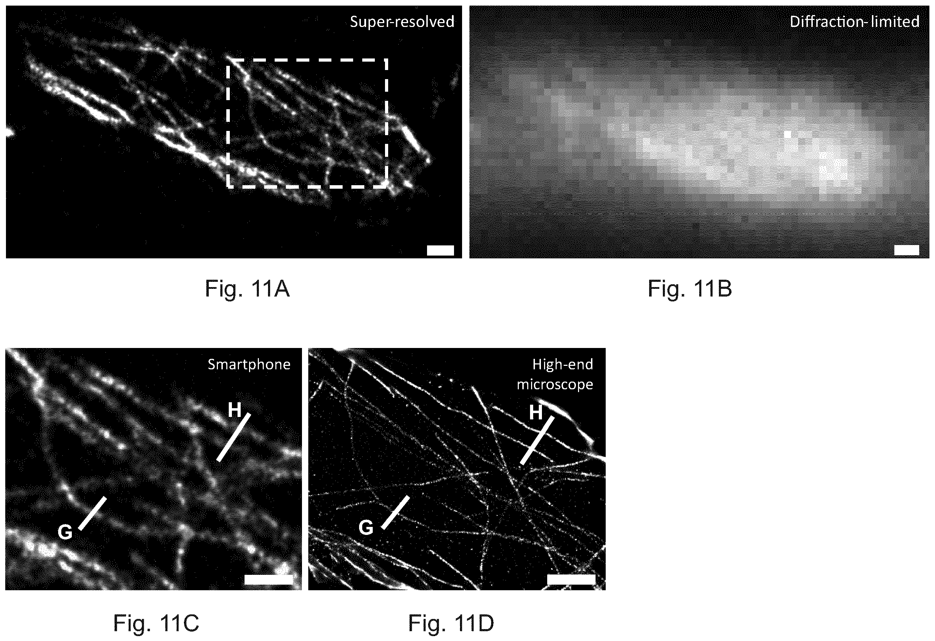

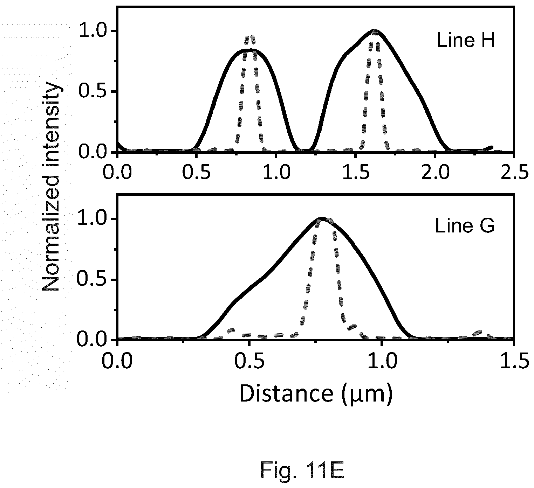

Figures 11A to 11E show an example of cellular DNA-PAINT imaging using the smartphone-based microscope. In particular, Figure 11A shows a super-resolution image of the microtubule network of fixed U2OS cells (scale bar: 2 µm). Figure 11B shows a diffraction-limited image of the microtubule network of fixed U2OS cells (scale bar: 2 µm). Figure 11C shows a magnified region of the microtubule network (white dashed square in Figure 11A) compared with the high-end microscope (Figure 11D). The same region of interest is displayed in Figures 11C and 11D (scale bar: 2 µm). Figure 11E shows intensity localization profiles across single microtubules, wherein solid lines refer to the smartphone-based microscope, and dashed lines represent the ones obtained with the high-end microscope.

### Reference signs used in the figures

- 1: Portable TIRF microscope
- 2: External portable device
- 10: Laser stage
- 20: Sample stage
- 21: Imaging sensor
- 22: Lens
- 30: Objective stage
- 40: Portable box
- 41: Half-cover
- 42: Cover support
- 50: Support
- 60: Battery
- 70: Magnet
- 80: Alignment screw
- 90: Support frame
- 100: Laser
- 110: Laser beam
- 120: Focusing lens
- 130: Heatsink
- 200: Sample
- 210: Prism
- 220: Prism holder
- 230: Sample holder
- 240: Immersion oil
- 250: LED cavity
- 260: LED blocker
- 270: Beam blocker
- 280: Fixation point
- 300: Objective
- 310: Emission filter
- 320: Objective holder
- 330: Slot
- N: Normal of a main plane of the sample stage
- x, y, z: Axis
- α: Laser angle
- θ: Incidence angle

## Claims

1. Portable total internal reflection fluorescence microscope (1) comprising:
- a portable box (40) comprising:
- a laser stage (10), comprising a laser (100),
- an objective stage (30), comprising an objective (300),
- a sample stage (20), comprising a sample (200) to be observed, wherein the sample stage (20) is disposed between the laser stage (10) and the objective stage (30),
- a support (50) on the portable box (40), arranged for receiving a camera (21, 22),
wherein the sample stage (20) comprises a prism (210),
wherein the laser stage (10) is arranged such that the laser beam (110) has an incidence angle (θ) at the prism (210) comprised in the range of 75° to 90°, the incidence angle (θ) being the angle formed by the laser beam (110) at the prism (210) with respect to a normal (N) of a main plane of the sample stage (20), so as to have a total internal reflection of the laser beam (110) and thus detect a single fluorescent molecule in the sample (200).

2. The portable total internal reflection fluorescence microscope (1) of claim 1, wherein the diameter of the laser beam (110) is at least one order of magnitude smaller than the maximum dimension of the prism (210).

3. The portable total internal reflection fluorescence microscope (1) of one of claims 1 or 2, wherein the prism (210) has a maximum dimension within the range of 2 mm to 6 mm.

4. The portable total internal reflection fluorescence microscope (1) of one of claims 1 to 3, wherein the prism (210) is a half-ball lens.

5. The portable total internal reflection fluorescence microscope (1) of one of claims 1 to 4, wherein the sample stage (20) comprises a prism holder (240), wherein the prism is attached, e.g. with an optical adhesive or an optical glue, to the prism holder (240).

6. The portable total internal reflection fluorescence microscope (1) of one of claims 1 to 5, wherein the laser (100) is arranged to be nested in a heat sink, wherein the laser and the heat sink are nested in a shell forming an angle of 0° to 15° with a bottom of the portable box.

7. The portable total internal reflection fluorescence microscope (1) of one of claims 1 to 6, wherein the objective stage (30) is arranged to be moved by a user in at least one direction, e.g. in three directions (x, y, z).

8. The portable total internal reflection fluorescence microscope (1) of one of claims 1 to 7, wherein the laser stage (10) is arranged to be moved by a user in at least one direction, e.g. in two directions (x, y).

9. The portable total internal reflection fluorescence microscope (1) of one of claims 1 to 8, wherein the laser stage (10), the sample stage (20) and/or the objective stage (30) could be removed from the portable box (40).

10. The portable total internal reflection fluorescence microscope of one of claims 1 to 9, comprising means (70) for repositioning the laser stage (10), the sample stage (20) and/or the objective stage (30) in the portable box (40), without the need for laser beam realignment.

11. The portable total internal reflection fluorescence microscope of one of claims 1 to 10, wherein the portable box comprises:
- a first cover on the top of the laser stage (10) and at the same level of a top surface of the sample stage (20), for preventing the user from being exposed to laser radiation and/or for receiving the support (50) for the camera, and/or
- a second cover arranged to be moved from the portable box, so as to connect to an external cable, e.g. a USB cable.

12. The portable total internal reflection fluorescence microscope (1) of one of claims 1 to 11, wherein the support (50) for the camera comprises at least two feet, e.g. two feet arranged to be freely placed on the portable box, and/or wherein the microscope (1) comprises feet under the portable box (40) made of a material arranged to reduce and/or absorb possible vibrations.

13. The portable total internal reflection fluorescence microscope (1) of one of claims 1 to 12, comprising a LED for setting the microscope (1) in a bright-field configuration.

14. The portable total internal reflection fluorescence microscope (1) of one of claims 1 to 13, wherein the objective stage (30) comprises an emission filter (310) arranged to be replaced without moving the camera (2) when positioned.

15. The portable total internal reflection fluorescence microscope (1) of one of claims 1 to 14, wherein the objective stage (30) comprises a protective means, as a protective tissue, allowing user eyes protection.
